# EUROPEAN PATENT SPECIFICATION

(11) **EP 0 837 613 B1**
(45) Date of publication and mention of the grant of the patent: **12.07.2006**
(21) Application number: 97307910.6
(22) Date of filing: 07.10.1997
(51) Int. Cl.: H04Q 3/00, H04J 3/12

(54) **Message frame of a messaging protocol**
Nachrichtenrahmen eines Nachrichtenübermittlungsprotokolls
Trame de message d'un protocole de messagerie

(30) Priority: 16.10.1996 US 732622
(43) Date of publication of application: 22.04.1998
(73) Proprietor: LUCENT TECHNOLOGIES INC., Murray Hill, New Jersey 07974-0636 (US)
(72) Inventor: Liu, Shen-Chung, Lisle, Illionois 60532 (US)
(74) Representative: Sarup, David Alexander

(56) References cited:
- US-A- 5 212 724
- US-A- 5 386 412

## Description

### Background of the Invention:

The invention relates, generally, to an improved messaging protocol for use in a telecommunications network and, more particularly, to a messaging protocol that efficiently carries control messages between network elements.

It will be appreciated that a typical telecommunications network consists of a plurality of switching systems, such as the 5ESS® switching system manufactured and sold by Lucent Technologies Inc., connected together via trunks for the transmission of signals therebetween. Selected ones of the switching systems, commonly referred to as central office switches, are connected to customer premise equipment (CPE) such as telephones, multimedia equipment, fax machines or the like via customer lines.
The customer lines can consist of any media suitable for transmitting voice and data including twisted wire pairs, coaxial cable, fiber optic cable or the like.

It is also known in the art to use remote terminals such as digital loop carriers, an example being the SLC® digital loop carrier manufactured and sold by Lucent Technologies Inc., between the central office and the customer premise. Distribution lines connect the central office switch to the remote terminal and customer lines connect the remote terminal to the CPE. In addition to the switching systems and digital loop carriers, other network elements such as broadband distribution elements, PBXs (public branch exchanges) or the like also host customer lines and/or trunks.

The switching systems, remote terminals and other similar network elements terminate the lines and trunks at line units and trunk units, respectively, commonly referred to collectively as interface units. It will be appreciated that the line units and trunk units include common circuitry for controlling functions common to all of the lines or trunks hosted by that unit that are connected to application packs containing circuitry specifically dedicated to each line and/or trunk by control and data buses. The line units typically include circuitry for performing the BORSCHT functions of battery feed, overvoltage protection, supervision, coding and decoding, testing as well as ringing. It will be appreciated that the specific functions performed by the line card circuitry can vary. For example, it is known in the art to provide the ringing function for all lines on a separate line unit. It will be understood that the circuitry is service specific and that different line cards are used to provide narrowband, ISDN, COIN, special service or the like. The trunk units include circuitry for performing coding and decoding, dc signaling, test functions, alarming and multiplexing. Thus, the line units and trunk units provide the basic processing for each line and trunk in the network and are the physical interface between the switching systems (or other network element) and virtually every line and trunk in the network.

The interface units communicate with their host terminal via transmission links for transferring control and data messages therebetween. The systems can be arranged with control and data being transmitted over the same link or separate links can be provided for control and data messages. Control messages constitute messages between a first network element and a second network element in which the functionality of one or the other of the network elements is being monitored or controlled. Data messages constitute the actual communication traffic being transmitted through the network. One or both types of messages can be transmitted between virtually any two network elements.

The existing message protocol for transferring control messages between the common circuitry and the application packs in the interface units is Universal Asynchronous Receiver/Transmitter (UART) where one byte of data consists of 11 bits. Each byte includes a start bit, a stop bit, a parity bit used for checking the parity of that byte and eight bits of data. Such a protocol has high overhead as each byte of data carries its own parity bit. Moreover, each data message is limited to eight bits of data. As a result, this protocol is relatively limited in its capacity to accurately and efficiently transmit varying length data messages.

Thus, a more robust messaging protocol for transmitting control and data messages in a telecommunications network is desired.

U.S. Patent 5,212,724 (Nazarenko et al.) describes a communication protocol for use between a communications dispatch console and a site controller of a trunked radio repeater system.

U.S. Patent 5,386,412 (Park et al.) describes a communication protocol used for asynchronous data communication between an Information Support Terminal (IST) and a multiport switch control processor of a telecommunication system.

### Summary of the Invention

A method and apparatus according to the present invention are set out in the independent claims, to which the reader is now referred. Preferred features are laid out in the dependent claims.

The protocol of the invention uses the standard UART transport modified to support a data message that is contained in a frame of any length. In one preferred embodiment the frame is between 3 and 6 bytes in length. The first byte of each frame includes a start bit and stop bit, a length of message indication and the parity bits for the entire message or frame. The other bytes in the frame each include a stop bit, start bit and eight bits of data. All of the bytes in the frame substitute a framing bit for the parity bit found in the existing protocol. This embodiment of the invention allows data messages of varying length with minimum overhead. Alternatively, for messages having a length of greater than 6 bytes, the first byte of the frame is used to define the length of frame. The last byte or last two bytes of the frame contain error checking bits. The remaining bytes of the frame contain payload data. This arrangement allows messages of virtually any length.

### Brief Description of the Drawings:

FIG. 1 shows a telecommunications system of the type using the messaging protocol of the invention.
FIG. 2 shows the data byte format of the messaging protocol of the invention.
FIG. 3 shows the header byte used in the protocol of the invention.
FIG. 4 shows a 3-byte message using the messaging protocol of the invention.
FIG. 5 shows a 4-byte message using the messaging protocol of the invention.
FIG. 6 shows a 5-byte message using the messaging protocol of the invention.
FIG. 7 shows a 6-byte message using the message protocol of the invention.
FIG. 8 shows the construction of a line unit of the switching system of FIG. 1.
FIG. 9 shows a message in a modified form of the messaging protocol of the invention.

### Detailed Description of the Invention:

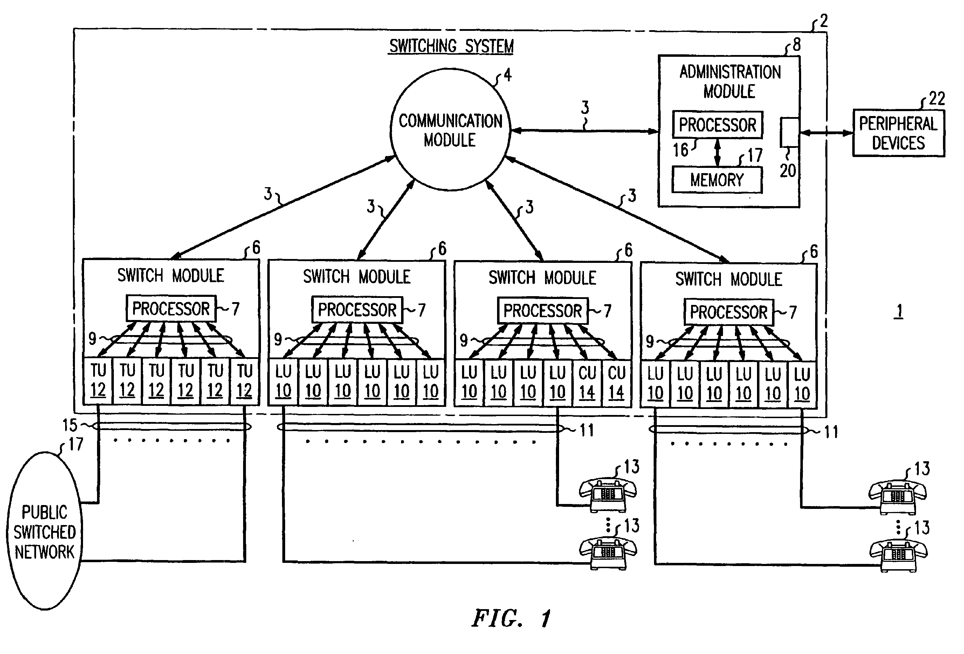

The operation of the system will be described with particular reference to the telecommunications network 1 and switching system 2 shown in FIG. 1. It is to be appreciated, however, that the system of the invention will operate in switching systems other than the illustrated embodiment and in network elements other than switching systems. Network 1 includes a switching system 2 such as an ISDN electronic switching system as described in U.S. Pat. No. 4,592,048 issued to Beckner et al. on May 27, 1986. Such a switching system can be a 5ESS® switch, described in AT&T Technical Journal, Vol. 64, No. 6, part 2, pp. 1305-1564, July/August 1985, and manufactured by Lucent Technologies Inc. The architecture of such a switching system includes a communication module 4 forming a hub and having a plurality of switch modules 6, and an administration module 8 emanating therefrom via communication links 3. Each switch module 6 is controlled by processor 7 and provides call processing, time division switching, and signaling for the lines and trunks to which it is connected. Line units 10 provide interface to customer lines 11 that connect to the customer premise equipment 13 and trunk units 12 provide interface to the trunks 15 that connect the other elements of the public switched network 17 such as other switching systems. Finally, circuit units 14 provide tones, announcements, recorded messages, tone decoding and the like. The line units, trunk units and circuit units are connected to microprocessors 7 via communication links 9. The administration module 8 provides functions that can be centralized such as maintenance control, craft interface, text and data base management, call routing and time slot allocation. The administration module 8 consists of a control unit such as the AT&T 3B21 D duplex processor 16 and main store memory 17. In some switching systems, the administration module is assisted by a separate processor that performs some administrative functions. The administration module 8 also includes an input/output processor 20 providing communication between the switching system 2 and peripheral devices 22 such as terminals, printers and the like. Communication module 4 consists of a message switch that provides the administration module-to-switch module and switch module-to-switch module message communication, and a time multiplexed switch providing the switch module to switch module time slot connection for voice and data communication and the clock distribution.

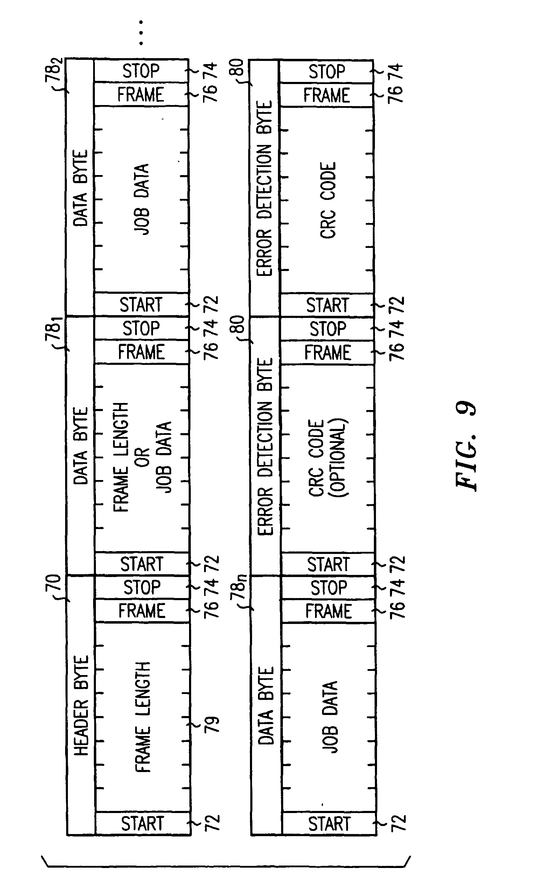

Referring to FIG. 8, each of the line units 10 consist of a processor or COMDAC 26 that communicates with a plurality of application specific application packs 27 over data buses 28 for transmitting voice and data and control buses 29 for transmitting control signals between these elements. The application packs communicate with lines 11 as is known in the art. Trunk units 12 have a similar construction. The control messages are communicated between the COMDAC and application packs over control buses 29 using the message protocol of the invention. The protocol of the invention can also be used to transmit control messages between the switch modules 6 and the communications module 4; to transmit control messages between the communications module 4 and the administration module 8 and to transmit control messages over links 9 between the switch module processor 7 and the line units 10, trunk units 12 and circuit units 14. The protocol of the invention can also be used in other network elements such as digital loop carriers, broadband distribution elements or the like. Moreover, the protocol of the invention can also be used in computing systems, for example, to transmit data or control messages between two computers or between a personal computer and mainframe.

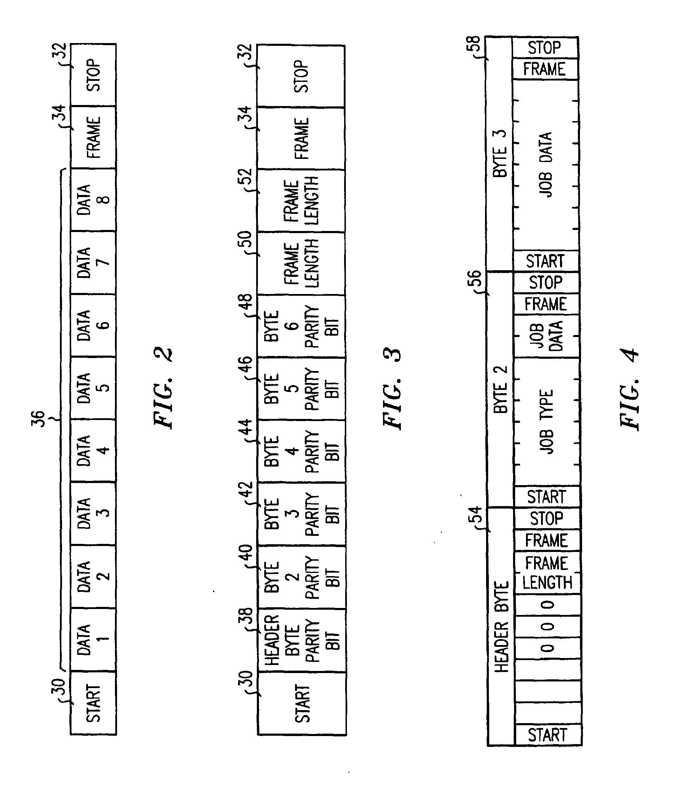

In the switching system control and data are transmitted using Universal Asynchronous Receiver/Transmitter (UART) at a rate of 256 Khz; however, the baud rate is independent of the message protocol of the invention. The UART data byte format is modified as shown in FIG. 2 and consists of 11 bits including one start bit 30, one stop bit 32, one framing bit 34 and eight bits of data 36. The framing bit 34 is used to indicate the boundary of a frame and occupies the position of the parity bit in the prior art protocol. Each frame is a logical grouping of bytes where the frame consists of a stream of data bytes ranging from 3 to 6 bytes in length. In the first byte of a frame, the framing bit 34 is set to 1 to mark the beginning of the frame. In the remaining bytes of that frame, the framing bits are all set to 0. Thus, the beginning of each frame is identified by a framing bit set to 1.

As described above, each frame is 3, 4, 5 or 6 bytes in length. Each single message must be transported entirely in one frame such that a message must be between 3 and 6 bytes in length. The first byte of the frame, designated the header byte, is shown in FIG. 3 and contains parity information for the entire frame as well as the length of the frame indication. Specifically, the length of the frame is designated by the last two data bits 50 and 52 of the first byte that indicate whether the frame is 3, 4, 5 or 6 bytes in length. Thus, the length of the frame, as indicated in the header byte, together with the framing bits 34, provided in each of the bytes of the frame, define the beginning and length of the frame.

The remaining six data bits carry the parity bit for the six possible bytes of the frame, one bit being dedicated to each byte. Thus, in the illustrated configuration the first data bit 38 contains the parity bit for the header byte, the second data bit 40 contains the parity bit for the second byte of the frame, the third data bit 42 contains the parity bit for the third byte of the frame, the fourth data bit 44 contains the parity bit for the fourth byte of the frame, the fifth data bit 46 contains the parity bit for the fifth byte of the frame and the sixth data bit 48 contains the parity bit for the sixth byte of the frame.

The parity calculation is based on an even parity scheme where the parity bits are chosen to make the total of all relevant bits an even number. Thus, the parity bits are set to 1 if an odd number of one bits are found and are set to 0 if an even number of one bits are found in the corresponding data bytes. Receipt of total odd number of bits implies that a transmission error has occurred.

Parity bit 48 of the header byte is the parity bit for the sixth byte of the frame. If there are six bytes in the frame, the bits of the sixth byte are totaled and if the total is an even number, parity bit 48 is set to 0. If the total is an odd number parity bit 48 is set to 1. If there is no byte 6, i.e. the frame has between 3 and 5 bytes, parity bit 48 is set to 0. The same process is used to calculate the value for parity bits 38 through 46. Because parity bit 38 is the parity bit for the header byte, the value for parity bit 38 is calculated for the header byte after parity bits 40 through 48 are calculated.

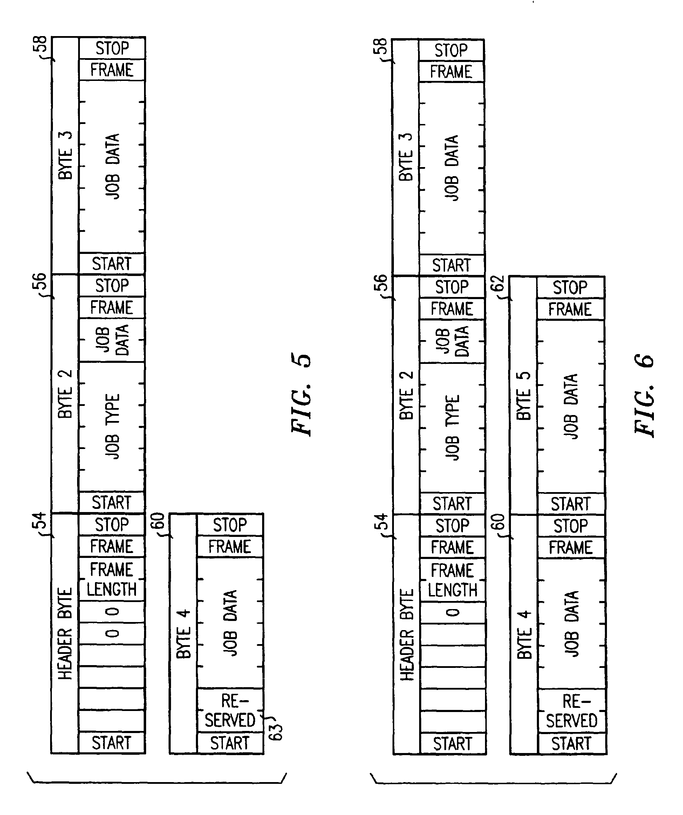

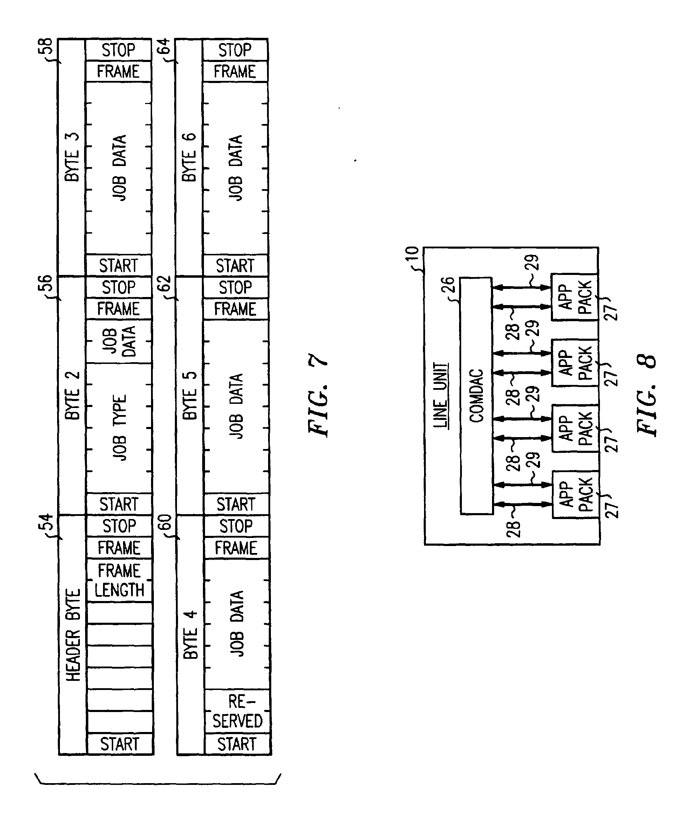

Referring more particularly to FIG. 4, a 3-byte frame is illustrated where the first byte 54 is the header byte described with reference to FIG. 3, the second byte 56 contains a six bit job type identification and two bits of specific job data and the third byte 58 contains job specific data. While the payload of the message is described specifically as including job type and job data information in the illustrated example it will be appreciated that the payload can consist of any message content. Referring to FIG. 5, in a four byte message, the first three bytes are configured as previously described and in the fourth byte 60 the two most significant bits 62 are reserved for use outside of the scope of the application pack, for example, these bits could be used to control the destination of control interface distribution orders, for example. The remaining bits of the fourth byte 60 contain job specific data. Finally, a 5-byte message and a 6-byte message are shown in FIGS. 6 and 7, respectively. In the 5-byte message the eight data bits of the fifth byte 62 and in the 6-byte message the eight data bits of the sixth byte 64 contain job data.

A modification of the messaging protocol of the invention will be described with reference to FIG. 9. The modified messaging protocol can be used to deliver messages of unlimited length and consists of a plurality of frames where each frame is a logical grouping of bytes. Each frame consists of one header byte 70, any number of data bytes 78₁...78ₙ for carrying payload, and one or two error detection bytes 80. The header byte 70 consists of 11 bits including one start bit 72, one stop bit 74, one framing bit 76 and eight bits of data 79. As in the header byte described with reference to FIG. 3, the framing bit 76 is used to indicate the boundary of a frame and occupies the position of the parity bit in the prior art protocol. In the first byte of a frame (header byte 70), the framing bit 76 is set to one to mark the beginning of the frame. In the remaining bytes of that frame the framing bits are all set to zero. Thus, the beginning of each frame is identified by a framing bit set to one. In addition to carrying the framing of bit 76 the header byte also defines the length of the frame. Specifically, the eight bits of data 79 are used to define the number of bytes in the frame. Thus, the length of the frame, as indicated by the header byte, together with the framing bit 76 provided in each of the bytes of the frame, define the beginning and the length of the frame. It should be noted that if the frame length is greater than can be defmed by the eight data bits in the header byte, the next byte 78₁ in the frame can also be used to designate frame length. In such an application the second byte of the frame has the same configuration as the header byte except that the framing bit is set to zero instead of one. The remaining data bytes 78₁...78ₙ carry the control message payload of the frame.

The last byte(s) of the frame is used to provide the error checking bits. Specifically, the last byte of the frame consists of a start bit, stop bit and framing bit as previously described. The remaining eight bits of the byte define a cyclic redundancy code (CRC) used for error checking purposes as is known in the art. It will be understand that the CRC bits are determined as a result of a calculation carried out on the set of transmitted bits by the transmitter. The CRC is encoded into the transmitted signal with the data. At the receiver, the calculation used to determine the CRC bits is repeated, and the result compared to the encoded signal. If the CRC encoded into the transmitted signal does not agree with the calculation created at the receiver, an error in transmission has occurred. The CRC calculations are chosen to optimize the error detection capability as is known in the art. One standard CRC calculation is described in the CCITT (International Telegraph and Telephone Consultative Committee). It will be appreciated that the number of bits in the code generally varies from between four and 16. Where more than an eight bit code is used it will be necessary to set forth the CRC bits in the last two adjacent bytes. Using the last two adjacent bytes for error detection purposes allows the protocol to use a CRC16 error check (i.e. 16 bits of data are used in the CRC code).

The protocol of the invention maximizes job data payload with minimum overhead for parity checking while providing reliable byte framing. The specific configuration and information included in the message payload can vary and depends upon whether the message is a control or data message. A control message could include diagnostics, parameter setting, configuration instructions, maintenance or any other control message between network elements. It is to be understood that the above description is only of one preferred embodiment of the invention. The invention is thus limited only as defined in the accompanying claims.

## Claims

1. A message frame of a messaging protocol for use in a telecommunications network, the message frame comprising:
a plurality of bytes, each of said bytes including a second plurality of bits;
one of said plurality of bytes (54) including at least one bit defining the number of bytes in said frame, and a plurality of bits (38, 40, 42, 44, 46, 48) containing parity values for said plurality of bytes, one of said plurality of bits containing parity values being dedicated to one of said plurality of bytes.

2. The message frame according to claim 1, wherein said message frame contains between three and six bytes.

3. The message frame according to claim 1, wherein each of said bytes includes eleven bits.

4. The message frame according to claim 1, wherein two bits (50, 52) define the number of bytes in the frame.

5. The message frame according to claim 1, wherein each of said bytes includes a start bit (30), a stop bit (32) and a framing bit (34).

6. The message frame according to claim 1, wherein one of said plurality of bytes is a header byte defining parity values for all of the other of said plurality of bytes, said parity values being defined in a parity bit, one parity bit being dedicated to each of said other of said plurality of bytes.

7. The message frame according to claim 1, wherein the other of said plurality of bytes contains control information.

8. The message frame according to claim 1, for use in an interface unit (10) of the type having a common processor (26) communicating with a plurality of application packs (27) via at least one communication link (28, 29), for delivering data and control messages between the common processor and the application packs, the message frame comprising:
between three and six bytes, each of said bytes including eleven bits of data; one of said eleven bits of data defining a start bit (30), one of said eleven bits of data defining a stop bit (32) and one of said eleven bits of data defining a framing bit (34);
one of said between three and six bytes defining a header byte (54), said header byte including two bits (50, 52) defining the number of bytes in the frame and six bits (38, 40, 42, 44, 46, 48) defining parity values for each of said bytes in said frame, one of said six bits being dedicated to each of said bytes; and
the remaining ones of said between three and six bytes including at least one bit of data.

9. A message frame of a messaging protocol for use in a telecommunications network, the message frame comprising:
a plurality of bytes, each of said bytes including a second plurality of bits where one of said bits in each of said bytes is a framing bit (76), the framing bit in a first one of said plurality of bytes (70) identifying the beginning of the frame;
said first one of said plurality of bytes including at least one bit (79) defining the number of bytes in said frame, and another of said bytes (80) including a plurality of bits containing an error detection code for said plurality of bytes.

10. The message frame according to claim 9, wherein each of said bytes includes eleven bits.

11. The message frame according to claim 9, wherein each of said bytes also includes a start bit (72) and a stop bit (74).

12. The message frame according to claim 9, wherein the remaining ones of said plurality of bytes contain control information.

13. The message frame according to claim 9, for use in an interface unit (10) of the type having a common processor communicating with a plurality of application packs (27) via at least one communication link (28, 29), for delivering data messages between the common processor and the application packs, the message frame comprising:
a plurality of bytes, each of said bytes including a second plurality of bits of data; one of said second plurality of bits of data defining a start bit (72), one of said second plurality of bits of data defining a stop bit (74) and one of said second plurality of bits of data defining a framing bit (76);
one of said plurality of bytes defining a header byte (70), said header byte including bits (79) defining the number of bytes in the frame; and another of said bytes (80) including a plurality of bits defining an error detection code for said frame; and
the remaining ones of said plurality of bytes including at least one bit of data.

## Patentansprüche

1. Nachrichtenrahmen eines Nachrichtenübermittlungsprotokolls zur Verwendung in einem Telekommunikationsnetz, mit folgendem:
einer Mehrzahl von Byte, wobei jedes dieser Byte eine zweite Mehrzahl von Bit enthält;
wobei eines der Mehrzahl von Byte (54) mindestens ein Bit enthält, das die Anzahl von Byte in diesem Rahmen definiert, und eine Mehrzahl von Bit (38, 40, 42, 44, 46, 48) mit Paritätswerten für diese Mehrzahl von Byte, wobei eines der Mehrzahl von Bit Paritätswerte enthält, die einem der Mehrzahl von Byte zugeordnet sind.

2. Nachrichtenrahmen nach Anspruch 1, wobei dieser Nachrichtenrahmen zwischen drei und sechs Byte enthält.

3. Nachrichtenrahmen nach Anspruch 1, wobei jedes der Byte elf Bit enthält.

4. Nachrichtenrahmen nach Anspruch 1, wobei zwei Bit (50, 52) die Anzahl von Byte im Rahmen definieren.

5. Nachrichtenrahmen nach Anspruch 1, wobei jedes der Byte ein Startbit (30), ein Stoppbit (32) und ein Rahmenkennungsbit (34) enthält.

6. Nachrichtenrahmen nach Anspruch 1, wobei eines der Mehrzahl von Byte ein Kopfbyte ist, das Paritätswerte für alle anderen der Mehrzahl von Byte definiert, wobei die Paritätswerte in einem Paritätsbit definiert werden, wobei jedem der anderen der Mehrzahl von Byte ein Paritätsbit zugeordnet ist.

7. Nachrichtenrahmen nach Anspruch 1, wobei das andere der Mehrzahl von Byte Steuerinformationen enthält.

8. Nachrichtenrahmen nach Anspruch 1, zur Verwendung in einer Schnittstelleneinheit (10) der Art mit einem gemeinsamen Prozessor (26), der mit einer Mehrzahl von Anwendungspaketen (27) über mindestens eine Kommunikationsstrecke (28, 29) kommuniziert, zum Abgeben von Daten und Steuerungsnachrichten zwischen dem gemeinsamen Prozessor und den Anwendungspaketen, mit folgendem:
zwischen drei und sechs Byte, wobei jedes dieser Byte elf Bit Daten enthält; wobei eines dieser elf Bit Daten ein Startbit (30) definiert, eines der elf Bit Daten ein Stoppbit (32) definiert und eines der elf Bit Daten ein Rahmenkennungsbit (34) definiert;
wobei eines der zwischen drei und sechs Byte ein Kopfbyte (54) definiert, wobei das Kopfbyte zwei Bit (50, 52) enthält, die die Anzahl von Byte im Rahmen definieren, und sechs Bit (38, 40, 42, 44, 46, 48), die Paritätswerte für jedes der Byte in diesem Rahmen definieren, wobei eines der sechs Bit jedem der Byte zugeordnet ist; und die übrigen der zwischen drei und sechs Byte mindestens ein Bit Daten enthalten.

9. Nachrichtenrahmen eines Nachrichtenübermittlungsprotokolls zur Verwendung in einem Telekommunikationsnetz, mit folgendem:
einer Mehrzahl von Byte, wobei jedes der Byte eine zweite Mehrzahl von Bit enthält, wobei eines der Bit in den Byte ein Rahmenkennungsbit (76) ist, wobei das Rahmenkennungsbit in einem ersten der Mehrzahl von Byte (70) den Beginn des Rahmens identifiziert;
wobei das erste der Mehrzahl von Byte mindestens ein Bit (79) enthält, das die Anzahl von Byte im Rahmen definiert, und ein anderes der Byte (80) eine Mehrzahl von Bit enthält, die einen Fehlererkennungscode für die Mehrzahl von Byte enthalten.

10. Nachrichtenrahmen nach Anspruch 9, wobei jedes der Byte elf Bit enthält.

11. Nachrichtenrahmen nach Anspruch 9, wobei jedes der Byte auch ein Startbit (72) und ein Stoppbit (74) enthält.

12. Nachrichtenrahmen nach Anspruch 9, wobei die übrigen der Mehrzahl von Byte Steuerinformationen enthalten.

13. Nachrichtenrahmen nach Anspruch 9 zur Verwendung in einer Schnittstelleneinheit (10) der Art mit einem gemeinsamen Prozessor, der mit einer Mehrzahl von Anwendungspaketen (27) über mindestens eine Kommunikationsstrecke (28, 29) kommuniziert, zum Abgeben von Datennachrichten zwischen dem gemeinsamen Prozessor und den Anwendungspaketen, mit folgendem:
einer Mehrzahl von Byte, wobei jedes der Byte eine zweite Mehrzahl von Bit Daten enthält, wobei eines der zweiten Mehrzahl von Bit Daten ein Startbit (72) definiert, eines der zweiten Mehrzahl von Bit Daten ein Stoppbit (74) definiert und eines der zweiten Mehrzahl von Bit Daten ein Rahmenkennungsbit (76) definiert;
wobei eines der Mehrzahl von Byte ein Kopfbyte (70) definiert, wobei das Kopfbyte Bit (79) enthält, die die Anzahl von Byte im Rahmen definieren; und ein weiteres der Byte (80) eine Mehrzahl von Bit enthält, die einen Fehlererkennungscode für den Rahmen definieren; und wobei die übrigen der Mehrzahl von Byte mindestens ein Bit Daten enthalten.

## Revendications

1. Trame de message d'un protocole de messagerie destinée à être utilisée dans un réseau de télécommunications, la trame de message comprenant :
une pluralité d'octets, chacun desdits octets comportant une deuxième pluralité de bits ;
l'un de ladite pluralité d'octets (54) comportant au moins un bit définissant le nombre d'octets dans ladite trame, et une pluralité de bits (38, 40, 42, 44, 46, 48) contenant des valeurs de parité de ladite pluralité d'octets, l'un de ladite pluralité de bits contenant des valeurs de parité dédiées à l'un de ladite pluralité d'octets.

2. Trame de message selon la revendication 1, dans laquelle ladite trame de message contient entre trois et six octets.

3. Trame de message selon la revendication 1, dans laquelle chacun desdits octets comporte onze bits.

4. Trame de message selon la revendication 1, dans laquelle deux bits (50, 52) définissent le nombre d'octets dans la trame.

5. Trame de message selon la revendication 1, dans laquelle chacun desdits octets comporte un bit de début (30), un bit d'arrêt (32) et un bit de verrouillage de trame (34).

6. Trame de message selon la revendication 1, dans laquelle l'un de ladite pluralité d'octets est un octet d'en-tête définissant des valeurs de parité de tous les autres octets de ladite pluralité d'octets, lesdites valeurs de parité étant définies dans un bit de parité, un bit de parité étant dédié à chacun desdits autres octets de ladite pluralité d'octets.

7. Trame de message selon la revendication 1, dans laquelle l'autre octet de ladite pluralité d'octets contient des informations de commande.

8. Trame de message selon la revendication 1, destinée à être utilisée dans une unité d'interface (10) du type ayant un processeur commun (26) communiquant avec une pluralité de paquets d'application (27) par l'intermédiaire d'au moins une liaison de communication (28, 29), pour délivrer des messages de données et de commande entre le processeur commun et les paquets d'application, la trame de message comprenant :
entre trois et six octets, chacun desdits octets comportant onze bits de données ; un desdits onze bits de données définissant un bit de début (30), un desdits onze bits de données définissant un bit d'arrêt (32) et un desdits onze bits définissant un bit de verrouillage de trame (34) ;
un desdits entre trois et six octets définissant un octet d'en-tête (54), ledit octet d'en-tête comportant deux bits (50, 52) qui définissent le nombre d'octets dans la trame et six bits (38, 40, 42, 44, 46, 48) qui définissent des valeurs de parité de chacun desdits octets dans ladite trame, un desdits six bits étant dédié à chacun desdits octets ; et
les octets restants desdits entre trois et six octets comportant au moins un bit de données.

9. Trame de message d'un protocole de message destinée à être utilisée dans un réseau de télécommunications, la trame de message comprenant :
une pluralité d'octets, chacun desdits octets comportant une deuxième pluralité de bits où l'un desdits bits dans chacun desdits octets est un bit de verrouillage de trame (76), le bit de verrouillage de trame dans un premier octet de ladite pluralité d'octets (70) identifiant le début de la trame ;
ledit premier octet de ladite pluralité d'octets comportant au moins un bit (79) qui définit le nombre d'octets dans ladite trame, et un autre octet desdits octets (80) qui comporte une pluralité de bits contenant un code de détection d'erreur pour ladite pluralité d'octets.

10. Trame de message selon la revendication 9, dans laquelle chacun desdits octets comporte onze bits.

11. Trame de message selon la revendication 9, dans laquelle chacun desdits octets comporte aussi un bit de début (72) et un bit d'arrêt (74).

12. Trame de message selon la revendication 9, dans laquelle les octets restants de ladite pluralité d'octets contiennent des informations de commande.

13. Trame de message selon la revendication 9, destinée à être utilisée dans une unité d'interface (10) du type ayant un processeur commun communiquant avec une pluralité de paquets d'application (27) par l'intermédiaire d'au moins une liaison de communication (28, 29), pour délivrer des messages de données entre le processeur commun et les paquets d'application, la trame de message comprenant :
une pluralité d'octets, chacun desdits octets comportant une deuxième pluralité de bits de données ; l'un de ladite deuxième pluralité de bits de données définissant un bit de début (72), l'un de ladite deuxième pluralité de bits de données définissant un bit d'arrêt (74) et l'un de ladite deuxième pluralité de bits de données définissant un bit de verrouillage de trame (76) ;
l'un de ladite pluralité d'octets définissant un octet d'en-tête (70), ledit octet d'en-tête comportant des bits (79) qui définissent le nombre d'octets dans la trame : et un autre desdits octets (80) comportant une pluralité de bits qui définissent un code de détection d'erreur pour ladite trame ; et
les octets restants de ladite pluralité d'octets comportant au moins un bit de données.
